# EUROPEAN PATENT APPLICATION

(11) **EP 4 478 108 A1**
(43) Date of publication of application: **18.12.2024**
(21) Application number: 23179488.4
(22) Date of filing: 15.06.2023
(51) Int. Cl.: G02B 26/02, G02B 21/16, G02B 21/00

(54) **A SHUTTER DEVICE AND A SHUTTER ASSEMBLY FOR PROTECTION OF SENSITIVE DETECTOR DEVICES**

(71) Applicant: Max-Planck-Gesellschaft zur Förderung der Wissenschaften e.V., 80539 München (DE)
(72) Inventor: ROBBINS, Trace, 82152 Martinsried (DE); DONOVAN, Joseph, 82152 Martinsried (DE); BAIER, Herwig, 82152 Martinsried (DE)
(74) Representative: Lambsdorff & Lange Patentanwälte Partnerschaft mbB

(57) **Abstract**

A shutter device (100) comprises a backplane (10), a front cap (20), and a single shutter blade (30) mounted between the backplane (10) and the front cap (20), wherein the shutter blade (30) is connectable with a drive mechanism and movable between an open state and a closed state.

## Description

### TECHNICAL FIELD

The present invention is related to a shutter device, a shutter assembly comprising such a shutter device, and a use thereof in scientific experiments, in particular in an experimental setup comprising a microscope and a detector device like, e.g., a photomultiplier tube.

### BACKGROUND

In known imaging or light collecting methods using microscopes, it is known to use photomultiplier tubes (PMTs) or other detector devices for light detection. Such PMTs are highly sensitive and able to detect very low light levels. PMTs are especially useful in high-end imaging applications, especially for samples with low incident flux in real time, where normal camera-based imaging techniques are not sensitive enough.

On the other hand, photomultiplier tubes are susceptible to too high incident light intensities and degrade according to the frequency of occurrence of too strong light incidence. In particular, PMTs can degrade under ambient lighting conditions. It was noticed in the past that in spite of optical filter-based protection of the photomultiplier tubes, significant degradation at a rate unwarranted by the effective operating time of the sensor occurred. Damage was occurring to the sensor even when supply voltage was disconnected, resulting in a significant decrease in the useful lifetime of the sensor in the normal environment in which it operates.

Too high incident light levels can in particular occur in situations where, for example, the object under examination is exchanged or other wavelengths not intended for collection (or detection) are used to stimulate the object being imaged. In such situations it is important to prevent ambient light from entering the PMT by blocking the entrance opening of the PMT. Also during normal operation, unforeseen excessive amounts of light coming from the object under examination can possibly fall on the PMT. Especially in such situations, it is important to block the incidence of light into the PMT very quickly and effectively.

Available solutions on the market are either primarily designed to "fail safe" into the closed position when power is withdrawn, or are continuously electrically active in both the open and closed position. Other solutions would require significant after-purchase modification to the device housing or the creation of several 'adapters' before and after the aperture to allow it to function within existing optical setups.

In this respect it should be mentioned that many electronic control circuits of PMTs are provided with a gating function which is configured to temporarily switch the distribution of the applied voltage to the dynode, thereby preventing the electrons from moving to the subsequent stage. However, this gating function is effective only when the timing of the excess light is known in advance. It has no effect on accidental and unforeseen overexposure to light. The electronic gating mechanisms also have limited extinction ratio, thus sufficiently bright illumination can still cause damage.

For these and other reasons there is a need for the present invention.

### SUMMARY

The photomultiplier tube is usually mounted on a microscope with a precision "head", which controls the motion of the imaging apparatus in XYZ space. At a certain threshold, the weight limit is exceeded and the head loses positional accuracy, which is unacceptable for the necessities of particular scientific experiments. It is therefore a particular object of the present invention to provide an optical shutter with extremely low weight.

A first aspect of the present invention is related to a shutter device comprising a backplane, a front cap, and a single shutter blade mounted between the backplane and the front cap, wherein the shutter blade is connectable with a drive mechanism and movable between an open state and a closed state.

According to an embodiment of the shutter device according to the first aspect, in the closed state essentially all light flow between the backplane and the front cap is blocked, and in the open state an uninterrupted light path is allowed between the backplane and the front cap.

According to an embodiment of the shutter device according to the first aspect, the backplane and the front cap comprise aligned light passage openings.

According to an embodiment of the shutter device according to the first aspect, the shutter blade comprises a shutter section that can be positioned between the light transmission openings of the backplane and the front cap to provide the closed state.

According to an embodiment of the shutter device according to the first aspect, one or all of the light transmission openings of the backplane and the front cap or the shutter section of the shutter blade comprise a circular shape.

According to an embodiment of the shutter device according to the first aspect, the shutter blade is connectable to a rotatable shaft of the drive mechanism.

According to an embodiment of the shutter device according to the first aspect, the shutter blade comprises a hole with which it can be pivotally hinged to the rotatable shaft. According to an example thereof, the hole is located in a center of mass of the shutter blade. This means that the shutter blade is counterbalanced by having approximately identical weights on either side of the pivot point.

According to an embodiment of the shutter device according to the first aspect, a weight of the shutter device is less than 50g, 40g, 30g, or 20g.

According to an embodiment of the shutter device according to the first aspect, one or all of the shutter blade, the backplane and the front cap comprise an asymmetric pattern.

According to an embodiment of the shutter device according to the first aspect, the drive mechanism is not enclosed in the shutter device.

According to an embodiment of the shutter device according to the first aspect, the shutter device further comprises a light receiving detector configured to detect incident light and connectable with a feedback line which is to be connected with the drive mechanism.

According to an embodiment of the shutter device according to the first aspect, one or all of the backplane, the front cap, or the shutter blade are made of or comprise one or more of aluminum, anodized aluminum, foamed aluminum, foamed metal, titanium, steel, polymer, foamed polymer, nylon, carbon-fiber filled polymer. Also possible are composite structures like, for example, sandwich structures. One possible disadvantage of foamed metals is that their surface configuration might be irregular. One way to cope with it is to use a metallic foam core and to cover it with a thin but nonporous layer of any desired material.

A second aspect of the present invention is related to a shutter assembly comprising a shutter device according to the first aspect and a drive mechanism connected with the shutter blade.

According to an embodiment of the shutter assembly according to the second aspect, the drive mechanism comprises a rotary solenoid, in particular a bistable rotary solenoid.

According to an embodiment of the shutter assembly according to the second aspect, the shutter blade is attached to a rotatable shaft of the drive mechanism.

A third aspect of the present invention is related to a use of a shutter device according to the first aspect or of a shutter assembly according to the second aspect in an experimental setup comprising a microscope and a detector device by inserting the shutter device or the shutter assembly between the microscope and the detector device.

According to an embodiment of the use according to the third aspect, the detector device is a photomultiplier tube.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.

The elements of the drawings are not necessarily to scale relative to each other. Like reference numerals designate corresponding similar parts.
Fig. 1 comprises Fig. 1A to Fig. 1C and shows two different perspective views (A, B) and a top view (C) onto the backplane of the shutter device.
Fig. 2 comprises Fig. 2A to Fig. 2c and shows two different perspective views (A, B) and a top view (C) onto the front cap of the shutter device.
Fig. 3 comprises Fig. 3A to Fig. 3C and shows two different perspective views (A, B) and a top view (C) onto the shutter blade of the shutter device.
Fig. 4 shows a further enlarged top view onto the shutter blade, wherein an enlarged circular section shows the semi-circular hole.
Fig. 5 comprises Fig. 5A and 5B and shows perspective views onto the assembled shutter device from the side of the front cap (A) and from the side of the back plate (B).
Fig. 6 comprises Fig. 6A and 6B and shows perspective views onto a microscope comprising two shutter assemblies arranged in two light-receiving paths of the microscope.

### DETAILED DESCRIPTION

In the following detailed description, reference is made to the accompanying drawings, which form a part hereof, and in which is shown by way of illustration specific embodiments in which the disclosure may be practiced. In this regard, directional terminology, such as "top", "bottom", "front", "back", "leading", "trailing", etc., is used with reference to the orientation of the Figure(s) being described. Because components of embodiments can be positioned in a number of different orientations, the directional terminology is used for purposes of illustration and is in no way limiting. It is to be understood that other embodiments may be utilized and structural or logical changes may be made without departing from the scope of the present disclosure. The following detailed description, therefore, is not to be taken in a limiting sense, and the scope of the present disclosure is defined by the appended claims.

It is to be understood that the features of the various exemplary embodiments described herein may be combined with each other, unless specifically noted otherwise.

As employed in this specification, the terms "bonded", "attached", "connected", "coupled" and/or "electrically connected/electrically coupled" are not meant to mean that the elements or layers must directly be contacted together; intervening elements or layers may be provided between the "bonded", "attached", "connected", "coupled" and/or "electrically connected/electrically coupled" elements, respectively. However, in accordance with the disclosure, the above-mentioned terms may, optionally, also have the specific meaning that the elements or layers are directly contacted together, i.e. that no intervening elements or layers are provided between the "bonded", "attached", "connected", "coupled" and/or "electrically connected/electrically coupled" elements, respectively.

Further, the word "over" used with regard to a part, element or material layer formed or located "over" a surface may be used herein to mean that the part, element or material layer be located (e.g. placed, formed, deposited, etc.) "indirectly on" the implied surface with one or more additional parts, elements or layers being arranged between the implied surface and the part, element or material layer. However, the word "over" used with regard to a part, element or material layer formed or located "over" a surface may, optionally, also have the specific meaning that the part, element or material layer be located (e.g. placed, formed, deposited, etc.) "directly on", e.g. in direct contact with, the implied surface.

Moreover, the word "exemplary" is used herein to mean serving as an example, instance, or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims may generally be construed to mean "one or multiple" unless specified otherwise or clear from context to be directed to a singular form. Also, at least one of A and B or the like generally means A or B or both A and B.

In addition, while a particular feature or aspect of an embodiment of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it should be understood that embodiments of the disclosure may be implemented in discrete circuits, partially integrated circuits or fully integrated circuits or programming means. Also, the term "exemplary" is merely meant as an example, rather than the best or optimal. It is also to be appreciated that features and/or elements depicted herein are illustrated with particular dimensions relative to one another for purposes of simplicity and ease of understanding, and that actual dimensions may differ substantially from that illustrated herein.

### DETAILED DESCRIPTION

The shutter device is an assembly of three primary parts, hereinafter referred to as Part 1, Part 2, and Part 3. In the assembled form the shutter device resembles a clamshell design.

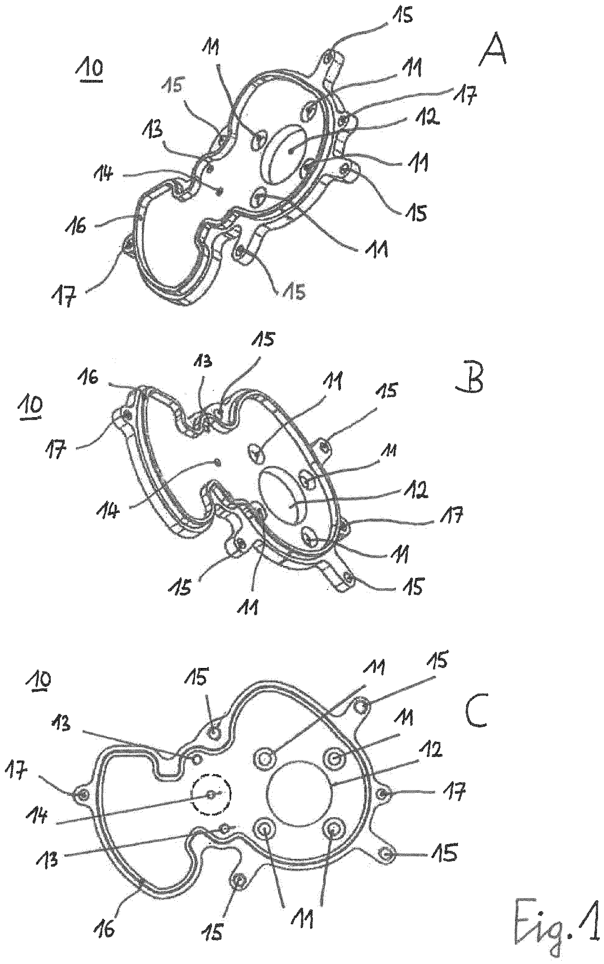

Fig. 1 comprises Fig. 1A to Fig. 1C and shows two different perspective views (A, B) and a top view (C) onto the backplane of the shutter device, hereinafter also referred to as Part 1.

Part 1 is an anodized aluminum backplane 10, which contains mounting holes 11 for connecting the backplane 10 to a PMT, an optical window 12 for light pass through and having a center aligned with a center of the entrance opening of the PMT, and mounting holes 13 for connecting the backplane 10 to the bistable solenoid and a pass through hole 14 for a drive shaft of the bistable solenoid which drive shaft is to be connected with a shutter blade 30 which will be shown below. The backplane 10 also contains mounting holes 15 for connecting the backplane 10 to a front cap 20 which will be shown below. Light tightness against this backplane 10 is provided by a 1 mm chamfered ridge 16 running 1 mm inset from the outer boundary of the backplane 10. The holes 17 are provided for connecting with the front cap 20. The width of the backplane 10 provides the structural rigidity of the final assembly.

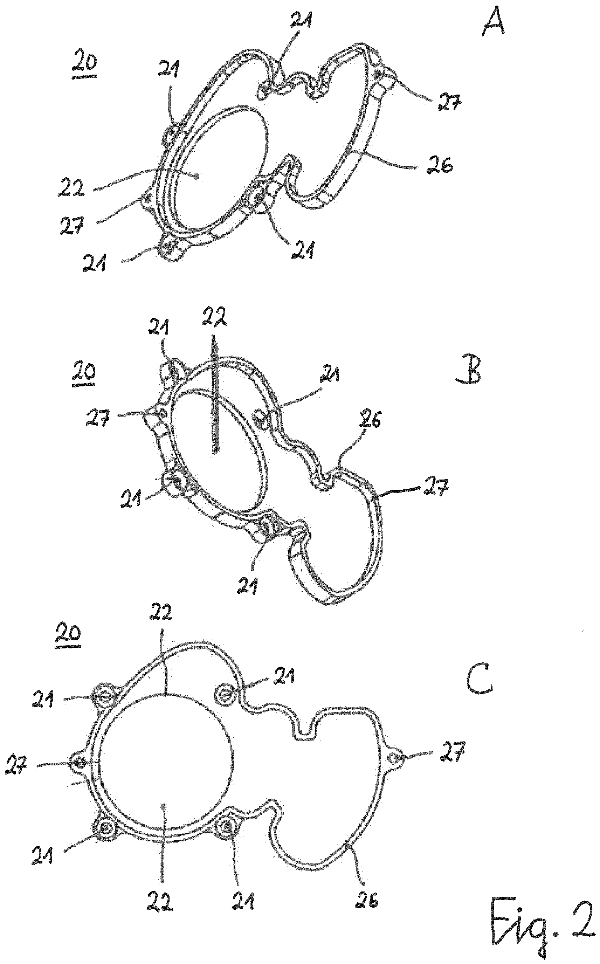

Fig. 2 comprises Fig. 2A to Fig. 2c and shows two different perspective views (A, B) and a top view (C) onto the front cap of the shutter device hereinafter also referred to as Part 2.

Part 2 is an anodized aluminum front cap 20 and forms the closure of the clamshell design. It contains a larger hole 22 for light pass through and having a center aligned with a center of the entrance opening of the PMT, 4 fastener holes 21 for connecting to the microscope main body, and holes 27 for connecting to the backplane 10, for example via M2 fasteners. The front cap 20 also features a tapped tube mount for establishing a light tight seal to open table systems. The front cap 20 also contains a chamfered groove 26 which makes contact outside its counterpart, the chamfered ridge 16, on the backplane 10, forming a light tight seal.

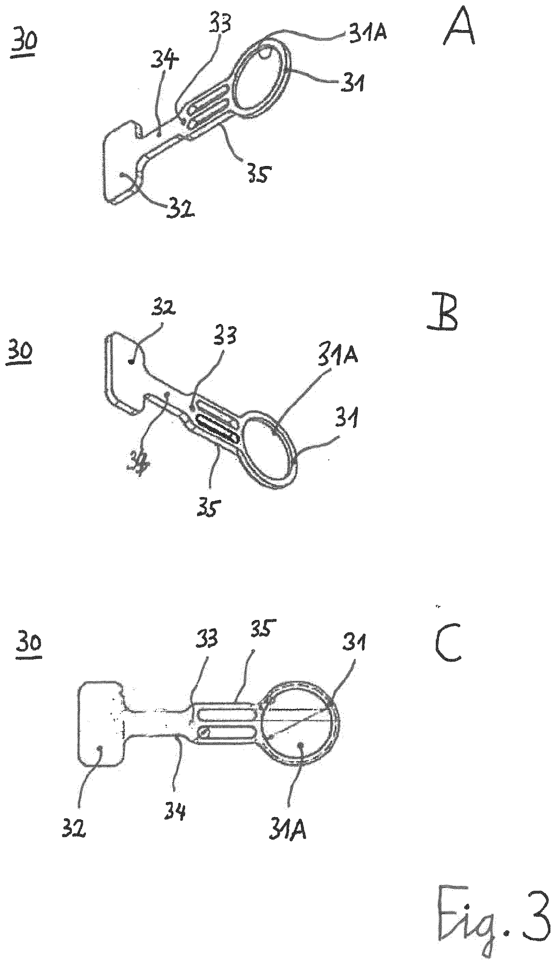

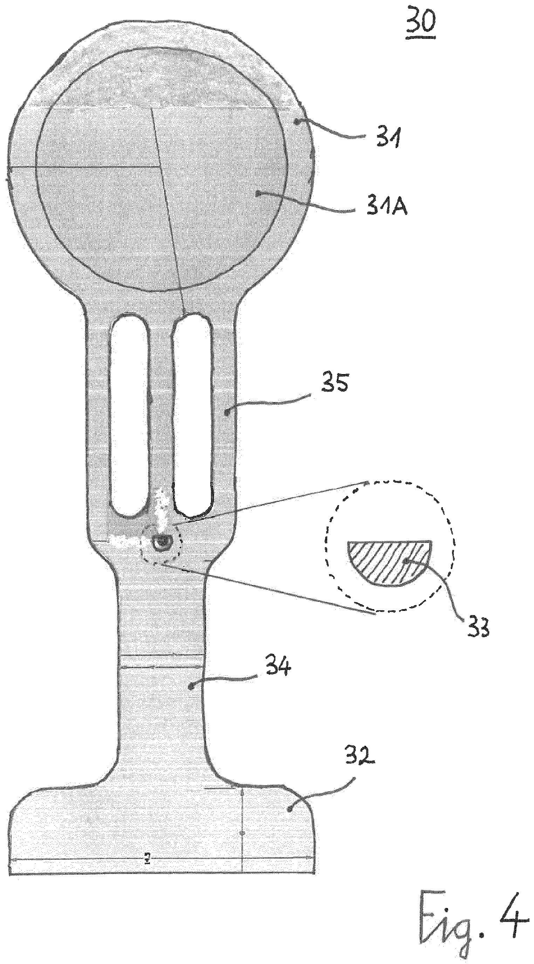

Fig. 3 comprises Fig. 3A to Fig. 3C and shows two different perspective views (A, B) and a top view (C) onto the shutter blade of the shutter device, and Fig. 4 shows a further enlarged top view onto the shutter blade, hereinafter also referred to as Part 3, wherein an enlarged circular section shows the semi-circular hole.

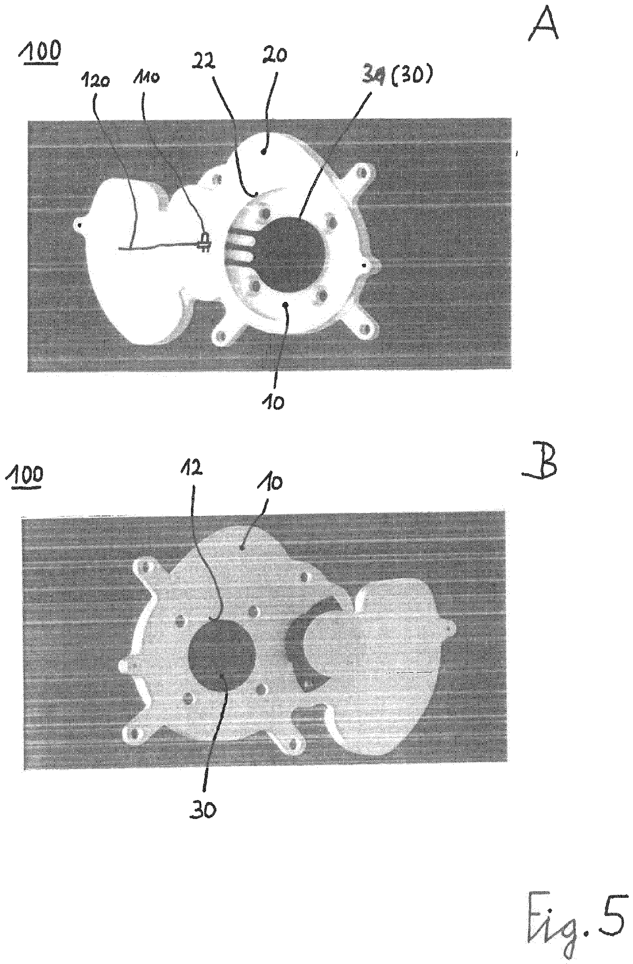

Part 3 is an anodized aluminum counterweight-balanced shutter blade 30 which in the first position blocks all light flow between the backplane 10 and the front cap 20, and in its second position allows an uninterrupted light path through the shutter device to the PMT detector mounted on the backplane 10. The shutter blade 30 comprises a circular section 31 at one end, which in order to take the first position is moved in front of the opening 12 of the backplane 10 by means of a rotary movement of the shutter blade 30 and thus blocks the light flow. The circular section 31 comprises a diameter that is smaller than the diameter of the opening 22 of the front cap 20, but larger than the diameter of the opening 12 of the backplane 10. The rotational movement of the shutter blade 30 is caused by the bistable solenoid (see also Fig. 5). The circular section 31 of the shutter blade 30 comprises an inset area 31A which is recessed by 0.75 mm but still solid to block light. At an opposite end the shutter blade 30 comprises an approximately rectangular section 32.

The shutter blade 30 also comprises one semicircular hole 33 exactly placed in the center of mass of the shutter blade 30, which allows for indexed placement onto the rotor shaft of a bistable solenoid. The shutter blade 30 is thus counterbalanced by having approximately identical weights on either side of the pivot point. This is achieved by connecting the rectangular section 32 to the pivot point via a solid section 34, while the circular section 31 is connected to the pivot point via a section 35, which has two slot-shaped cut-outs, which have no further technical function apart from the desired equalisation of the weights on both sides of the pivot point already mentioned.

The semicircular hole 33 functions as a pivot point for swivelling the shutter blade 30. The bistable solenoid provides a 45 degree movement of the shutter blade 30. Due to the bistable operation of the solenoid, the shutter blade 30 can remain unpowered in any orientation while maintaining open or closed position.

The shutter blade 30 is axisymmetrical with respect to a longitudinal axis passing through the center of the circular section 31 and the semicircular opening 33, but asymmetrical with respect to an axis perpendicular to this axis passing through the semicircular opening 33. This asymmetric pattern of the body of the shutter blade 30 is desirable for accommodating a balance between total assembly size and positional accuracy of the shutter blade 30 when not under active positioning by the solenoid.

The side of the shutter blade 30 which overlaps the light path has a 1 mm chamfer to negate the possibility of catching due to any misalignment caused by wear over the lifetime of the device. Any device must be extremely light weight (under 50 grams).

Fig. 5 comprises Fig. 5A and 5B and shows perspective views onto the assembled shutter device from the side of the front cap (A) and from the side of the back plate (B).

More specifically, Fig. 5 shows a shutter device 100 comprising a backplane 10, a front cap 20, and a shutter blade 30 inserted between the backplane 10 and the front cap 20. The shutter blade 30 is shown in a closed position in which its circular section 31 blocks the opening 12 of the backplane 10.

The shutter device 100 shown in Fig. 5 may, for example, comprise a weight of 18.3 grams assembled and a 5.7 mm optical path cross-section.

The shutter device 100 may further comprise a light receiving device like a photodiode 110 which is facing the microscope and detects the light radiation coming from the microscope or from an environment. The photodiode 110 could be connected via a feedback line 120 connected with an electronic circuit which itself is connected with the drive mechanism. If the incoming light power exceeds a critical threshold, the electronic circuit reacts and causes the drive mechanism to close the optical shutter device 100.

The shutter device 100 provides a benefit over current solutions in the following ways:
1. Integrating the mounting systems of common optical components/sensors into the front and back plates significantly reduces weight and size of the device compared to competitors without requiring any adapters which increase the size/profile of the device.
2. It's a bistable shuttering device with all active electronics moved off the device itself. The combination of these two factors with the first item in this list make the device a significant improvement over the current scientific 'state of the art'.

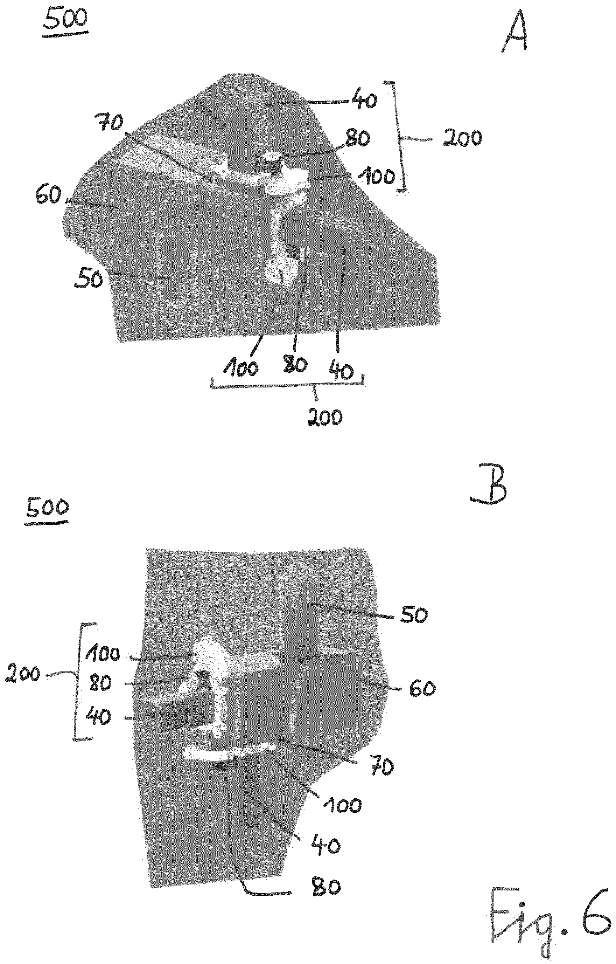

Fig. 6 comprises Fig. 6A and 6B and shows perspective views onto a microscope comprising two shutter assemblies arranged in two light-receiving paths of the microscope.

The microscope 500 shown in Fig. 6 comprises two light-receiving paths, at each end of which a PMT assembly 200 containing a shutter device 100, a rotary solenoid 80 controlling the shutter device 100 and a PMT 40 are arranged. The radiation coming from the sample enters a microscope objective 50, from where it enters a first microscope body 60. Inside the first microscope body 60, a deflection mirror is arranged to deflect the radiation through a 90° angle. The radiation then enters a second microscope body 70, in which a beam splitter is arranged, by means of which a first part of the light radiation is deflected through a 90° angle in the direction of a first PMT assembly 200, while a second part of the radiation passes through the beam splitter in the direction of a second PMT assembly 200.

The setup shown in Fig. 6 can be used in particular for laser fluorescence experiments. In this case, an excitation laser beam is coupled into the first microscope body 60 and deflected onto the sample by a further deflection mirror located therein. The two PMT assemblies can then be used to examine the fluorescence radiation reflected back from the sample at two different wavelengths. For this purpose, the above-mentioned beam splitter can be designed as a dichroic mirror that deflects all wavelengths above a certain value up to one PMT assembly and then transmits all wavelengths below a certain value through to the other PMT assembly.

Accordingly in this setup there are two PMT 'channels' and each one has an individually operable shutter assembly 200. This in particular useful in cases in which the laser light can be used to generate an image that can be used to excite two different fluorophores at the same time. By doing this, one can create a mix of two different wavelengths of fluorescence light which travel through the system together and can be filtered separately for detection using the existing optics in the microscope. Sometimes, not all light is separated by the filters, in which case it is useful to have the PMTs actively shuttered if they're not needed for data or signal collection.

It should be mentioned that besides PMTs other highly sensitive light detectors could also be used and protected, in particular those sensitive to light-induced damage. As examples, the damage sensitivity could arise from a photocathode itself (including bialkali, multialkali, GaAsP, or semiconductor photocathodes) or from light amplification creating excessive currents in the detector.

Important Data:
1. Under stimulus projection conditions, the off-state output voltage of the PMTs is -1.5 mV. (DC power supply is on, but amplification voltage is off)
2. When the PMT is energized and amplifying signals but the shutter is in the closed position, the signal output voltage is 2.0 mV.
3. When the shutter is then opened under the same conditions, the signal output voltage is over 5000mV and runs the risk of triggering in-built overcurrent protections. Result is a 2500 fold light rejection improvement over the current setup.

In addition, while a particular feature or aspect of an embodiment of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Furthermore, it should be understood that embodiments of the disclosure may be implemented in discrete circuits, partially integrated circuits or fully integrated circuits or programming means. Also, the term "exemplary" is merely meant as an example, rather than the best or optimal. It is also to be appreciated that features and/or elements depicted herein are illustrated with particular dimensions relative to one another for purposes of simplicity and ease of understanding, and that actual dimensions may differ substantially from that illustrated herein.

Although specific embodiments have been illustrated and described herein, it will be appreciated by those of ordinary skill in the art that a variety of alternate and/or equivalent implementations may be substituted for the specific embodiments shown and described without departing from the scope of the present disclosure. This application is intended to cover any adaptations or variations of the specific embodiments discussed herein. Therefore, it is intended that this disclosure be limited only by the claims and the equivalents thereof.

## Claims

1. A shutter device (100), comprising
a backplane (10);
a front cap (20); and
a single shutter blade (30) mounted between the backplane (10) and the front cap (20), wherein the shutter blade (30) is connectable with a drive mechanism (80) and movable between an open state and a closed state.

2. The shutter device (100) according to claim 1, wherein
in the closed state essentially all light flow between the backplane (10) and the front cap (20) is blocked, and in the open state an uninterrupted light path is allowed between the backplane (10) and the front cap (20).

3. The shutter device (100) according to claim 1 or 2, wherein
the backplane (10) and the front cap (20) comprise aligned light passage openings.

4. The shutter device (100) according to claim 3, wherein the shutter blade (30) comprises a shutter section (31) that can be positioned between the light transmission openings of the backplane (10) and the front cap (20) to provide the closed state.

5. The shutter device (100) according to claim 3 or 4, wherein
one or all of the light transmission openings of the backplane (10) and the front cap (20) or the shutter section (31) of the shutter blade (30) comprise a circular shape.

6. The shutter device (100) according to any one of the preceding claims, wherein
the shutter blade (30) is connectable to a rotatable shaft of the drive mechanism (80).

7. The shutter device (100) according to claim 6, wherein the shutter blade (30) comprises a hole (33) with which it can be pivotally hinged to the rotatable shaft.

8. The shutter device (100) according to claim 7, wherein the hole (33) is located in a center of mass of the shutter blade (30).

9. The shutter device (100) according to any one of the preceding claims, wherein
a weight of the shutter device (100) is less than 50g, 40g, 30g, or 20g.

10. The shutter device (100) according to any one of the preceding claims, wherein
one or all of the shutter blade (30), the backplane (10) and the front cap (20) comprise an asymmetric pattern.

11. The shutter device (100) according to any one of the preceding claims, wherein
the drive mechanism (80) is not enclosed in the shutter device (100).

12. The shutter device (100) according to any one of the preceding claims, further comprising
a light receiving detector configured to detect incident light and connectable with a feedback line which is to be connected with the drive mechanism.

13. A shutter assembly (200), comprising
a shutter device (100) according to any one of the preceding claims; and
a drive mechanism (80) connected with the shutter blade (30).

14. The shutter assembly (200) according to claim 13, wherein the drive mechanism (80) comprises a rotary solenoid, in particular a bistable rotary solenoid.

15. The shutter assembly (200) according to claim 13 or 14, wherein
the shutter blade (30) is attached to a rotatable shaft of the drive mechanism.

16. Use of a shutter device (100) according to any one of claims 1 to 12 or of a shutter assembly (200) according to any one of claims 13 to 15 in an experimental setup comprising a microscope and a detector device by inserting the shutter device (100) or the shutter assembly (200) between the microscope and the detector device.
